(19) Europäisches Patentamt

European Patent Office

Office européen des brevets

(11) Veröffentlichungsnummer: **0 294 713 B1**

# (12) EUROPÄISCHE PATENTSCHRIFT

(45) Veröffentlichungstag der Patentschrift: **29.09.93**

(21) Anmeldenummer: **88108867.8**

(22) Anmeldetag: **03.06.88**

(51) Int. Cl.⁵: **H04J 3/06**

(54) Einrichtung zur schnellen Rahmen- und Phasensynchronisation.

(30) Priorität: **12.06.87 DE 3719659**

(43) Veröffentlichungstag der Anmeldung:
**14.12.88 Patentblatt 88/50**

(45) Bekanntmachung des Hinweises auf die
Patenterteilung:
**29.09.93 Patentblatt 93/39**

(84) Benannte Vertragsstaaten:
**AT BE CH DE ES FR GB IT LI NL SE**

(56) Entgegenhaltungen:
**EP-A- 0 141 194**
**DE-A- 3 227 151**

(73) Patentinhaber: **Alcatel SEL Aktiengesellschaft**
**Lorenzstrasse 10**
**D-70435 Stuttgart(DE)**

(72) Erfinder: **Széchényi, Kálmán**
**Bergstrasse 115**
**D-7151 Spiegelberg(DE)**

(74) Vertreter: **Brose, Gerhard et al**
**Alcatel SEL AG Patent- und Lizenzwesen**
**Postfach 30 09 29**
**D-70449 Stuttgart (DE)**

**Beschreibung**

Die Erfindung betrifft eine Einrichtung zur empfangsseitigen Rahmen- und Phasensynchronisation nach dem Oberbegriff des Hauptanspruchs. Eine derartige Einrichtung ist aus der DE-OS 32 27 151 bekannt.

Bei der bekannten Einrichtung wird ein empfangener Zeichenstrom zunächst mit einem Abtasttakt abgetastet. Die Abtastwerte werden mittels eines Analog-Digital-Wandlers digitalisiert; die Verzerrungen des an sich digitalen Zeichenstroms bleiben in den digitalisierten Abtastwerten enthalten. In einem digitalen Korrelator wird die Kreuzkorrelationsfunktion aus einer Folge digitaler Abtastwerte und einem bekannten und empfangsseitig gespeicherten Rahmenkennungswort gebildet. Die Kreuzkorrelationsfunktion weist ein Maximum auf, wenn im empfangenen Zeichenstrom das Rahmenkennungswort erscheint. Daraus wird der Rahmentakt abgeleitet. Durch die zeitdiskrete Verarbeitung (Abtasttakt) werden auch nur einzelne Abtastwerte der Kreuzkorrelationsfunktion gewonnen. Aus den beiden Abtastwerten der Kreuzkorrelationsfunktion, die deren maximalem Abtastwert vorausgehen und nachfolgen, kann nun aber bestimmt werden, ob diese zeitlich symmetrisch zum Maximum liegen oder nicht. Daraus wird eine Steuerinformation zur Nachstellung der Phase des Abtasttaktes abgeleitet und diese Phase damit nachgestellt.

Bei dieser bekannten Einrichtung kann die Nachstellung der Phase des Abtasttaktes nur langsam erfolgen. Da in den Abtastwerten die Verzerrungen des Zeichenstroms enthalten bleiben, werden für die Bildung der Steuerinformation auch solche Anteile herangezogen, die von Vorschwingern solcher Zeichen herrühren, die dem Ranmenkennungswort nachfolgen, und von Nachschwingern solcher Zeichen, die dem Rahmenkennungswort vorangehen. Diese Anteile werden deshalb bei der bekannten Einrichtung zunächst durch Mittelwertbildung über mehrere Rahmenperioden ausgefiltert.

Der Erfindung liegt die Aufgabe zugrunde, die Nachstellung der Phase des Abtasttaktes schneller zu machen.

Diese Aufgabe wird erfindungsgemäß gelöst durch eine Einrichtung nach der Lehre des Hauptanspruchs. Eine weitere Ausgestaltung der Erfindung ist dem Unteranspruch zu entnehmen.

Die vorliegende Erfindung nützt folgenden Grundgedanken:

Das empfangene Rahmenkennungswort enthält sowohl den Rahmentakt als auch den Zeichentakt. Auf dem Übertragungsweg wird das Rahmenkennungswort in einer ganz bestimmten Weise verzerrt. Bei Abtastung dieses verzerrten Rahmenkennungsworts mit einem phasenfehlerbehafteten Abtasttakt kann der Phasenfehler aus den Abtastwerten bestimmt werden. Diejenigen Zeichen, die dem Rahmenkennungswort vorausgehen und nachfolgen, bilden aber bei der Verzerrung auf dem Übertragungsweg Vor- und Nachschwinger, die sich dem Rahmenkennungswort überlagern und dessen Auswertung erschweren. Beim Stand der Technik werden diese Vor- und Nachschwinger durch Mittelwertbildung über mehrere Rahmen berücksichtigt. Gemäß dem Grundgedanken der Erfindung dagegen werden die Werte dieser Vor- und Nachschwinger zu den Abtastzeitpunkten berechnet und als Korrekturwerte von den gemessenen Abtastwerten abgezogen, so daß allein der Einfluß des verzerrten Rahmenkennungsworts übrigbleibt. Bereits aus dem ersten erkannten Rahmenkennungswort wird so eine brauchbare Steuerinformation zur Nachstellung der Phase des Abtasttaktes gewonnen. Vorteilhafterweise werden jedoch nicht die Abtastwerte selbst, sondern daraus abgeleitete Größen durch (abgeleitete) Korrekturwerte korrigiert.

Die Vor- und Nachschwinger werden aus den regenerierten Zeichen mittels der Übertragungskoeffizienten des Übertragungswegs gewonnen. Die Übertragungskoeffizienten werden entweder fest vorgegeben oder aus den Entzerrerkoeffizienten eines adaptiven Entzerrers abgeleitet.

Im folgenden wird die Erfindung anhand eines Ausführungsbeispiels unter Zuhilfenahme der beiliegenden Zeichnungen weiter erläutert.

Figur 1                zeigt ein grobes Blockschaltbild einer erfindungsgemäßen Einrichtung.
Figur 2 und Figur 3     zeigen detailliertere Blockschaltbilder dieser Einrichtung.
Figur 4                zeigt ein Blockschaltbild eines adaptiver Entzerrers nach dem Stand der Technik.

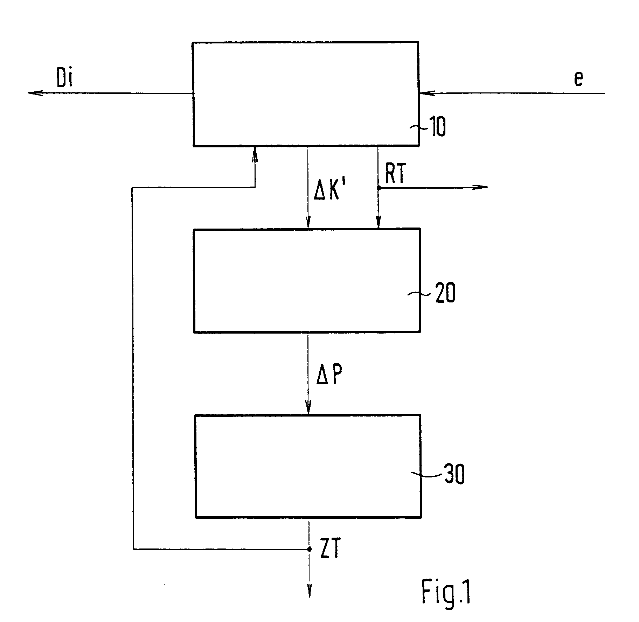

Gemäß Figur 1 ist eine erfindungsgemäße Einrichtung in drei Blöcke gegliedert. Ein erster Block 10 formt einen empfangenen Zeichenstrom e unter Zuhilfenahme eines Zeichen-Abtasttakts ZT in eine Folge binärer Daten Di um. In diesem ersten Block 10 werden außerdem ein Rahmentakt RT und eine Fehlerinformation $\Delta K'$ abgeleitet. Die Fehlerinformation $\Delta K'$ gibt die augenblickliche Abweichung der Phase des Zeichen-Abtasttakts ZT vom tatsächlichen Zeichentakt an. Ein zweiter Block 20 bildet aus dieser Fehlerinformation $\Delta K'$ unter Zuhilfenahme des Rahmentakts RT eine Nachstell-Steuerinformation $\Delta P$. Der zweite Block 20 erfüllt regelungstechnische Funktionen und soll z.B. Phasenstreuung (Jitter) oder Schwingen verhindern. Ein dritter Block 30 erzeugt den von der Nachstell-Steuerinformaton $\Delta P$ phasenkorrigierten Zeichen-Abtasttakt ZT.

Im vorliegenden Beispiel erfolgt die Signalverarbeitung digital. Der empfangene Zeichenstrom e besteht aus einer Folge digitalisierter Abtastwerte zu je 8 Bit im Rhythmus des Zeichen-Abtasttakts ZT. Auch die

Fehlerinformation $\Delta$ K′ ist jeweils ein 8-Bit-Datenwort; die Fehlerinformationen werden jedoch nur einmal pro Rahmen ausgewertet, d.h. mit dem Rahmentakt RT. Die Nachstell-Steuerinformation $\Delta$ P ist jeweils ein 4-Bit-Datenwort.

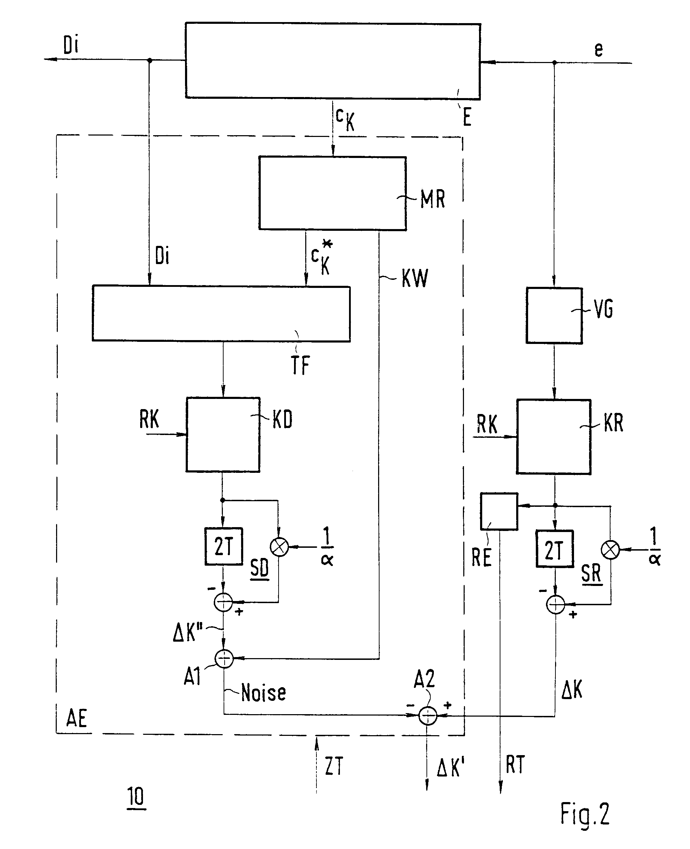

Figur 2 zeigt den ersten Block 10 aus Figur 1 in größerem Detail. In einem adaptiven Entzerrer E werden aus dem empfangenen Zeichenstrom e die binären Daten Di gewonnen.

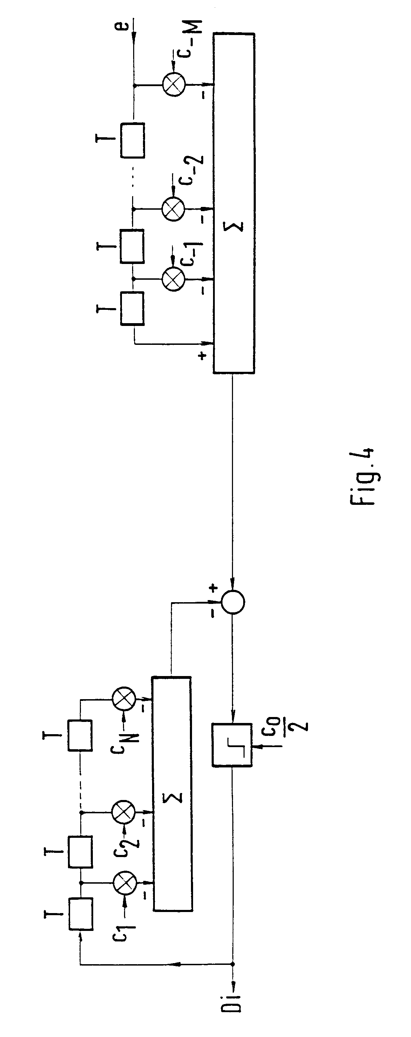

Ein Beispiel für den Aufbau dieses Entzerrers E ist in Figur 4 dargestellt. Dieser Aufbau ist dem Fachmann bekannt, eine nähere Beschreibung unterbleibt deshalb. Jedes Zeichen des übertragenen Zeichenstroms wird auf dem Übertragungsweg so verzerrt, daß sich eine Vielzahl von Vorschwingern und Nachschwingern ergibt. Der Abstand der Vorschwinger und Nachschwinger ist gleich der Zeichenlänge, so daß sich Vorschwinger und Nachschwinger verschiedener Zeichen direkt überlagern. Es werden nun M Vorschwinger und N Nachschwinger eines jeden Zeichens im Entzerrer E durch Bewertung mit den Koeffizienten $c_{-1}$ bis $c_{-M}$ bzw. $c_1$ bis $c_N$ berücksichtigt. Der Index eines Koeffizienten gibt jeweils den Abstand des durch diesen Koeffizienten zu bewertenden Vor- oder Nachschwingers eines Zeichens zu diesem an. Das Zeichen selbst wird durch den Koeffizienten $c_O$ berücksichtigt, indem die Entscheidungs-schwelle auf $c_0/2$ gelegt ist. Es ist dabei von untergeordneter Bedeutung, wieviele Vor-und Nachschwinger berücksichtigt werden, ob nur Nachschwinger berücksichtigt werden und ob die Entzerrerkoeffizienten $c_k$ fest eingestellt sind oder adaptiv nachgeregelt werden.

Aus denjenigen Entzerrerkoeffizienten, die erforderlich sind, um den empfangenen Zeichenstrom e vollständig zu entzerren, können die Übertragungskoeffizienten des Übertragungswegs gewonnen werden. Da davon auszugehen ist, daß die tatsächlich verwendeten Entzerrerkoeffizienten eine gute Näherung darstellen, kann daraus auch eine gute Näherung für die Übertragungskoeffizienten des Übertragungswegs gewonnen werden.

Der erste Block 10 weist eine Auswerteeinrichtung AE auf. Diese enthält ein Transversalfilter TF, das den übertragungsweg nachbildet. Ein Matrixrechner MR ist vorgesehen, um aus den Entzerrerkoeffizienten $c_k$ die Filterkoeffizienten $c_k{}^*$ des Transversalfilters TF zu bestimmen. Zur Umrechnung von Entzerrerkoeffizienten $c_k$ in Filterkoeffizienten $c_k{}^*$ werden die Gleichungen nach Tabelle 1 zugrundegelegt. Rechner, die geeignet sind, diese Umrechnungen vorzunehmen, gehören dem Stand der Technik an.

Am Ausgang des Transversalfilters TF erscheint damit prinzipiell das gleiche Signal wie am Eingang des Entzerrers E, jedoch ohne diejenigen Abweichungen, die durch Fehler der Abtastphase bedingt sind. Laufzeiten im Entzerrer E und im Transversalfilter TF bedingen jedoch eine Verzögerung gegenüber dem empfangenen Zeichenstrom e. Um den tatsächlich empfangenen Zeichenstrom e mit dem im Transversalfilter TF nachgebildeten Zeichenstrom vergleichen zu können, wird der empfangene Zeichenstrom e in einem Verzögerungsglied VG entsprechend verzögert.

An den Ausgängen von Verzögerungsglied VG und Transversalfilter TF liegen damit zwei zu vergleichende Signale an. Dem Verzögerungsglied VG ist ein Korrelator KR nachgeschaltet, der den Zeichenstrom mit dem bekannten Rahmenkennungswort RK korreliert. In einem anschließenden Summierkreis SR wird jeder Wert mit einem Faktor $1/\alpha$ multipliziert und der um zwei Abtasttaktzeiten T verzögerte Wert davon abgezogen. Das Ergebnis ist ein Korrekturwert $\Delta$ K. Dieser Korrekturwert $\Delta$ K setzt sich aus einem Nutzanteil und einem Störanteil zusammen. Der Nutzanteil ist abhängig vom Phasenfehler des Zeichen-Abtasttakts ZT und soll zu dessen Korrektur herangezogen werden; der Störanteil resultiert aus Vor- und Nachschwingern der dem Rahmenkennungswort nachfolgenden bzw. vorangehenden Zeichen.

Dem Transversalfilter TF ist eine gleiche Schaltung aus Korrelator KD und Summierkreis SD nachge-schaltet, die einen Korrekturwert $\Delta$ K″ bildet. Da in diesem Zweig das Signal ohne Abtastphasenfehler nachgebildet ist, verschwindet im Korrekturwert $\Delta$ K″ der Nutzanteil, es bleibt nur der Störanteil übrig. Ein Addierer A2 bildet die Fehlerinformation $\Delta$ K′, indem vom Korrekturwert $\Delta$ K, bestehend aus Nutz- und Störanteil, der nur den Störanteil enthaltende Korrekturwert $\Delta$ K″ abgezogen wird.

Außerdem ist der Eingang einer Rahmenerkennungsschaltung RE mit dem Ausgang des Korrelators KR verbunden. Diese Rahmenerkennungsschaltung RE erzeugt den Rahmentakt RT, der einerseits für die weitere Verarbeitung der binären Daten Di außerhalb der vorliegenden Einrichtung benötigt wird und andererseits für die Auswertung der Fehlerinformation $\Delta$ K′.

Der gesamte in Fig. 2 gezeigte erste Block 10 arbeitet mit dem Zeichen-Abtasttakt ZT. Es kann aber nur aus dem Rahmenkennungswort eine verwertbare Fehlerinformation $\Delta$ K′ gewonnen werden, also mit dem Rahmentakt RT.

Zum weiteren Verständnis der Gewinnung der Korrekturwerte wird auf die bereits erwähnte DE-OS 32 27 151 verwiesen, bezüglich des Faktors $1/\alpha$ auf die DE-OS 33 33 714.

Der in der Auswerteeinrichtung AE ermittelte Korrekturwert $\Delta$ K″ enthält noch zwei weitere Störanteile. Der erste Störanteil ergibt sich aus einer nicht idealen Nachbildung des Übertragungswegs durch das Transversalfilter TF. Der zweite Störanteil ergibt sich daraus, daß die störenden Auswirkungen der Vor- und

3

Nachschwinger phasenfehlerfrei in $\Delta K''$ eingehen, während sie sich tatsächlich phasenfehlerbehaftet in $\Delta K$ auswirken.

Die nicht ideale Nachbildung des Übertragungswegs ist einerseits auf die endliche Länge des Transversalfilters TF zurückzuführen, andererseits darauf, daß die Filterkoeffizienten $c_k^*$ fehlerbehaftet sind. Werden die Filterkoeffizienten $c_k^*$, wie im Beispiel, nicht fest vorgegeben, sondern aus den Entzerrerkoeffizienten $c_k$ eines adaptiven Entzerrers E abgeleitet, so führen sowohl ein nichtadaptierter Zustand des Entzerrers als auch Phasenfehler des Abtasttakts zu Fehlern in den Filterkoeffizienten. All diese Fehler wirken sich sowohl auf die dem Rahmenkennungswort vorausgehenden und nachfolgenden Daten als auch auf das Rahmenkennungswort selbst aus.

Zumindest der Einfluß der Fehler in den Filterkoeffizienten auf das Rahmenkennungswort muß kompensiert werden.

Diese Kompensation erfolgt dadurch, daß der Einfluß des Rahmenkennungsworts für sich berechnet wird. Es muß also derjenige Anteil im Korrekturwert $\Delta K''$ bestimmt werden, der sich aus dem Durchlauf des Rahmenkennungsworts durch Transversalfilter TF, Korrelator KD und Summierkreis SD zu dem für die weitere Auswertung relevanten Zeitpunkt ergibt. Dies ist ein einziger konstanter Korrekturwert KW, der nur vom Rahmenkennungswort und den Filterkoeffizienten $c_k^*$ abhängt. Für den sehr vorteilhaften Fall, daß das Rahmenkennungswort ein N-Bit-Barkercode ist, ist dieser Korrekturwert $KW = -N(c_1 / -c_{-1})$, im Falle eines 11-Bit-Barkercodes also $KW = -11(c_1 / -c_{-1})$. In diesem Fall hat das Rahmenkennungswort die Folge 11100010010 oder eine dazu äquivalente (zeitlich oder in der Polarität invertiert). Ein Barkercode hat die Eigenschaft, daß seine Autokorrelationsfunktion bei Übereinstimmung gleich N, sonst betragsmäßig maximal gleich 1 ist. Beim Beispiel nach Fig. 2 wird dieser Korrekturwert KW im Matrixrechner MR berechnet und mittels eines Addierers A1 dem Korrekturwert $\Delta K''$ hinzuaddiert.

Der Einfluß der übrigen Störgrößen wird vernachlässigt.

Die Weiterverarbeitung der Fehlerinformation $\Delta K'$ zur Nachstell-Steuerinformation $\Delta P$, d.h. der innere Aufbau des zweiten Blocks 20, ist grundsätzlich von der Art der Gewinnung dieser Fehlerinformation $\Delta K'$ unabhängig.

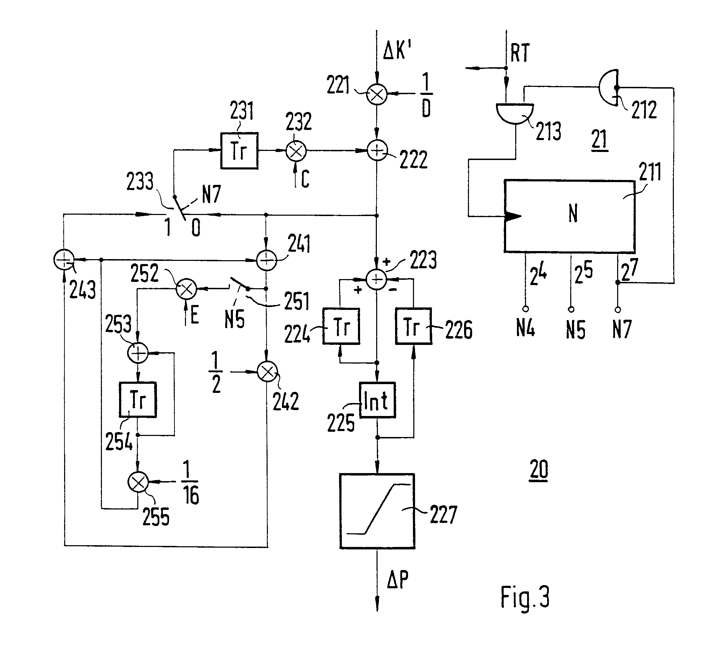

Fig. 3 zeigt einen bevorzugten Aufbau für den zweiten Block 20.

Die Fehlerinformation $\Delta K'$ durchläuft auf ihrem Weg zur Nachstell-Steuerinformation $\Delta P$ einen Hauptzweig und, in Abhängigkeit von der Zeit, einen oder mehrere Nebenzweige. Im Hauptzweig durchläuft das Signal zunächst einen Multiplizierer 221, in dem es mit dem Kehrwert eines Faktors D multipliziert wird, dann zwei Addierer 222 und 223, wird dann in einer Rundungseinheit 225 auf eine ganze Zahl (Integer) gerundet und in einem Begrenzer 227 auf einen 4-Bit-Wert (z.B. -8 bis +7) begrenzt. Der Ausgangswert des Begrenzers 227 ist die benötigte Nachstell-Steuerinformation $\Delta P$. Das Ausgangssignal des Addierers 223 wird außerdem in einem Speicher 224 zwischengespeichert und um eine Rahmendauer Tr verzögert wieder einem nichtinvertierenden Eingang des Addierers 223 zugeführt. Weiter wird das Ausgangssignal der Rundungseinheit 225 in einem Speicher 226 zwischengespeichert und um eine Rahmendauer Tr verzögert einem invertierenden Eingang des Addierers 223 zugeführt.

Zwischen dem Addierer 222 und dem Addierer 223 wird das Signal abgegriffen und während der ersten 128 Rahmendauern über einen Umschalter 233 einem Speicher 231 zugeführt und nach einer Rahmendauer Tr über einen Multiplizierer 232 wieder einem Eingang des Addierers 222 zugeführt. Der Multiplizierer 232 multipliziert mit einem Faktor C.

Das zwischen dem Addierer 222 und dem Addierer 223 abgegriffene Signal wird nach Ablauf der ersten 32 Rahmendauern über einen Addierer 241 und einen nach 32 Rahmendauern einschaltenden Schalter 251 einem weiteren Zweig zugeführt, der über einen Multiplizierer 252, einen Addierer 253, einen Speicher 254 und einen weiteren Multiplizierer 255 einerseits auf den Addierer 241 zurück und andererseits über einen Addierer 243 zum Umschalter 233 führt, um dort nach Ablauf der ersten 128 Rahmendauern weitergeschaltet zu werden. In diesem Zweig liegt noch eine Rückführung vom Ausgang des Speichers 254 zu einem Eingang des Addierers 253. Der Multiplizierer 252 multipliziert mit dem Faktor E, der Multiplizierer 255 mit dem Faktor 1/16.

Ein weiterer Zweig führt vom Ausgang des Addierers 241 über einen Multiplizierer 242 zu einem weiteren Eingang des Addierers 243. Der Multiplizierer 242 multipliziert mit dem Faktor 1/2.

Der gesamte zweite Block 20 arbeitet mit dem Rahmentakt RT. An jeder Stelle des beschriebenen Signalwegs liegt damit einmal pro Rahmen ein neuer digitaler Wert vor. Um sowohl das Einschwingen dieser Regelung als auch den eingeschwungenen Zustand vorteilhaft zu gestalten, werden zum einen durch die Schalter 233 und 251 die verschiedenen Zweige umgeschaltet, zum andern werden die Faktoren C, D und E entsprechend Tabelle 2 geändert.

Die Umschaltung zwischen den einzelnen Phasen wird durch einen Zählerkreis 21 gesteuert. Dieser enthält einen siebenstufigen Binärzähler 211, dessen vierte, fünfte und siebente Stufe abgegriffen werden und Signale N4, N5 und N7 für die Ansteuerung der Schalter und die Umschaltung der Faktoren liefern. Je nach Zählerstand N ist N4 = 1 für N ≧ 16, N5 = 1 für N ≧ 32 und N7 = 1 für N = 128. Ist der Zähler voll (N = 128), so wird er angehalten, indem das Signal N7 über einen Inverter 212 auf einen Eingang eines UND-Gatters 213 geführt wird, dessen anderem Eingang der Rahmentakt RT zugeführt wird und dessen Ausgang zum Takteingang des Zählers 211 führt. Selbstverständlich ist dafür zu sorgen, daß der Zähler bei Verlust des Synchronismus zurückgestellt wird.

Der dritte Block 30 entsprechend Fig. 1 entspricht den Baugruppen 7, 8 und 9 in Fig. 2 der mehrfach erwähnten DE-OS 32 27 151.4 und kann auch so wie dort aufgebaut sein.

Der erste Block 10 kann auch abweichend von dem anhand von Fig. 2 beschriebenen Beispiel aufgebaut sein. So kann insbesondere die Funktion des Transversalfilters TF durch einen Rechner übernommen werden, der auch die Funktion des Matrixrechners MR mit übernimmt.

Weiter kann die Funktion der beiden Zweige zusammengefaßt werden, wodurch einer der Korrelatoren KR und KD und der zugehörige Summierkreis SR bzw. SD eingespart werden. Die Funktion des Addierers A2 wird damit im Signalweg nach vorn gezogen. Am Ausgang bleibt nur noch die Addition des Korrekturwerts KW.

Werden die Daten Di, die zum Rahmenkennungswort gehören, am Eingang des Transversalfilters TF oder eines dessen Funktion übernehmenden Rechners auf "Null" gesetzt, was mit Hilfe des Rahmentakts möglich ist, so ist der Korrekturwert KW = 0, dessen laufende Berechnung und Addition im Addierer A1 kann entfallen.

Auch die Funktionsweise der Korrelatoren und Summierkreise kann durch Algorithmen beschrieben werden. Ihre Funktion kann deshalb durch einen Rechner übernommen werden. Dies gilt selbst für den adaptiven Entzerrer E.

Je nach der Übertragungsgeschwindigkeit des empfangenen Zeichenstroms e und den zur Verfügung stehenden Rechnern kann zwischen Rechnereinsatz und Einzelrealisierung der verschiedenen Funktionen variiert werden. Dabei ist zu berücksichtigen, daß einzelne Funktionen mit dem Rahmentakt RT, andere mit dem Zeichen-Abtasttakt ZT auszuführen sind.

$$C_- = \begin{pmatrix} c_{-1} \\ c_{-2} \\ \vdots \\ c_{-M} \end{pmatrix} \quad ; \quad C_+ = \begin{pmatrix} c_0 \\ c_1 \\ \vdots \\ c_N \end{pmatrix} \quad ; \quad C_-^* = \begin{pmatrix} c_{-1}^* \\ c_{-2}^* \\ \vdots \\ c_{-M}^* \end{pmatrix} \quad ; \quad C_+^* = \begin{pmatrix} c_0^* \\ c_1^* \\ \vdots \\ c_N^* \end{pmatrix}$$

$$K = - \begin{bmatrix} 1 & 0 & \cdots & 0 \\ c_{-1} & 1 & \cdots & 0 \\ c_{-2} & c_{-1} & \cdots & 0 \\ \vdots & \vdots & & \vdots \\ c_{-M+1} & c_{-M+2} & \cdots & 1 \end{bmatrix} \quad \vdots$$

$$B = \begin{bmatrix} c_0^* & c_1^* & \cdots & c_{M-1}^* \\ 0 & c_0^* & \cdots & c_{M-2}^* \\ 0 & 0 & \cdots & c_{M-3}^* \\ \vdots & \vdots & & \vdots \\ 0 & 0 & \cdots & c_0^* \end{bmatrix}$$

$$L = \begin{bmatrix} c_0 & c_{-1} & \cdots & c_{-M} & 0 & 0 & \cdots & 0 \\ 0 & c_0 & \cdots & c_{-M+1} & c_{-M} & 0 & \cdots & 0 \\ \vdots & \vdots & & \vdots & \vdots & \vdots & & \vdots \\ 0 & 0 & \cdots & 0 & 0 & 0 & \cdots & c_0 \end{bmatrix}$$

$$C_+^* = L^{-1} \cdot C_+ \quad ; \quad C_-^* = K^{-1} \cdot B \cdot C_-$$

Tabelle 1

EP 0 294 713 B1

Tabelle 2

| N | 0... 15 | 16...31 | 32...127 | 128... |
|---|---------|---------|----------|--------|
| C | 3/4 | 3/4 | 7/8 | 1 |
| D | 1/(1/4+1/8) | 8 | 16 | 16 |
| E | – | – | 1 | 1/32 |

**Patentansprüche**

1. Einrichtung zur empfangsseitigen Rahmensynchronisation und zur empfangsseitigen Phasensynchronisation des Abtasttaktes auf die Phasenlage des Zeichentaktes eines über einen Übertragungsweg empfangenen Zeichenstroms, der in periodischen Zeitabständen ein Rahmenkennungswort enthält; mit einem digitalen Korrelator (KD) zur Bildung einer Kreuzkorrelationsfunktion aus dem empfangenen, mit dem Abtasttakt abgetasteten Zeichenstrom und dem empfangsseitig gespeicherten Rahmenkennungswort (RK); mit einer Rahmenerkennungsschaltung zur Ermittlung des Rahmentaktes durch Bestimmung der im Abstand der Rahmenperiode wiederkehrenden Maxima der Kreuzkorrelationsfunktion, mit einer Phasensynchronisationsschaltung, die aufgrund von Werten, welche die Kreuzkorrelationsfunktion jeweils in der Umgebung des erkannten wiederkehrenden Maximums hat, eine Steuerinformation zur Nachstellung der Phase des Abtasttaktes ableitet und diese Phase damit nachstellt; und mit einem Entscheider zum Regenerieren der Zeichen, **dadurch gekennzeichnet**, daß eine Auswerteeinrichtung (AE) vorhanden ist, die aufgrund der regenerierten Zeichen und von Übertragungskoeffizienten ($C_k^*$) des Übertragungswegs Korrekturwerte ermittelt und damit die zur Ableitung der Steuerinformation ($\Delta$ P) herangezogenen Werte korrigiert und daß die Korrekturwerte (KW) diejenigen Einflüsse berücksichtigen, die durch Vor- oder Nachschwinger von Zeichen verursacht sind, die dem Rahmenkennungswort (RK) vorausgehen und nachfolgen.

2. Einrichtung nach Anspruch 1 mit einem adaptiven Entzerrer zum Entzerren des empfangenen Zeichenstroms, dadurch gekennzeichnet, daß die Übertragungskoeffizienten des Übertragungswegs aus den adaptiv ermittelten Entzerrerkoeffizienten des Entzerrers (E) abgeleitet werden.

**Claims**

1. Apparatus for frame synchronization at the receiving end and for synchronizing the phase of the sampling clock at the receiving end with the clock phase of a character stream received over a transmission path and containing a frame alignment word at regular time intervals, said apparatus comprising a digital correlator (KD) for forming a crosscorrelation function from the received character stream, sampled at the repetition rate of the sampling clock, and the frame alignment word (RK) stored at the receiving end, a frame detection circuit for determining the frame clock by locating the maxima of the crosscorrelation function which recur at intervals of one frame period, a phase synchronization circuit which derives control information for adjusting the phase of the sampling clock from values of the crosscorrelation function in the vicinity of the detected recurrent maximum, and uses said control information to adjust the phase of the sampling clock, and a decision element for regenerating the characters, **characterized in** that an evaluation unit (AE) is provided which determines correction values from the regenerated characters and from transmission coefficients of the transmission path and uses said correction values to correct the values used for deriving the control information ($\Delta$ P), and that the correction values take into account the influences caused by preoscillations and postoscillations of characters which respectively follow and precede the frame alignment word (RK).

7

**2.** Apparatus as claimed in claim 1, comprising an adaptive equalizer for equalizing the received character stream, characterized in that the transmission coefficients of the transmission path are derived from the adaptively determined equalization coefficients of the equalizer (E).

**Revendications**

**1.** Equipement pour la synchronisation de trame, du côté récepteur, et pour la synchronisation de phase, du côté récepteur, de la périodicité de balayage sur la position de phase de la périodicité des caractères d'un flux de caractères qui est reçu par l'intermédiaire d'une voie de transmission et qui, à intervalles de temps périodiques, contient un mot de reconnaissance de trame; équipement comportant un corrélateur numérique (RD) pour former une fonction de corrélation mutuelle à partir du flux de caractères reçu, balayé avec la périodicité de balayage et du mot de reconnaissance de trame (RK) mémorisé du côté récepteur; comportant aussi un circuit de reconnaissance de trame pour établir la périodicité de trame en déterminant les maximums, réapparaissant à l'intervalle de la période de trame, de la fonction de corrélation mutuelle; comportant aussi un circuit de synchronisation de phase qui, sur la base de valeurs que présente respectivement la fonction de corrélation mutuelle au voisinage des maximums réapparaissant, connus, déduit une information de commande pour la reprise de réglage de la phase de la périodicité de balayage et opère avec la reprise de réglage de cette phase; et comportant aussi un organe de décision pour régénérer les caractères, équipement caractérisé par le fait qu'il existe un organe de traitement (AE) qui, sur la base des caractères régénérés et de coefficients de transmission ($C_{k*}$) de la voie de transmission établit des valeurs correctrices et corrige ainsi les valeurs mises à contribution pour déduire l'information de commande ($\Delta P$) et par le fait que les valeurs correctrices (KW) prennent en compte les influences provoquées par les états transitoires juste antérieurs ou juste postérieurs des caractères qui précèdent et suivent le mot de reconnaissance de trame (RK).

**2.** Equipement selon la revendication 1, comportant un organe correcteur adaptatif pour corriger le flux de caractères reçu, caractérisé par le fait que l'on fait dériver des coefficients correcteurs, établis en mode adaptatif, de l'organe correcteur (E) les coefficients de transmission de la voie de transmission.

Fig.1

Fig.2

Fig.3

Fig. 4